# EUROPEAN PATENT SPECIFICATION

(11) **EP 1 764 239 B1**
(45) Date of publication and mention of the grant of the patent: **29.04.2009**
(21) Application number: 06380139.3
(22) Date of filing: 25.05.2006
(51) Int. Cl.: B60G 3/04

(54) **Suspension for vehicles**
Radaufhängung für Fahrzeuge
Suspension pour véhicules

(30) Priority: 14.09.2005 ES 200502021 U
(43) Date of publication of application: 21.03.2007
(73) Proprietor: Seat, S.A., 08040 Barcelona (ES)
(72) Inventor: Cuquerella Estrugo, Antonio, c/o Seat S.A., 08760 Martorell Barcelona (ES); Bagur, Benoit, c/o Seat S.A., 08760 Martorell Barcelona (ES)
(74) Representative: Carvajal y Urquijo, Isabel

(56) References cited:
- EP-A1- 0 830 955
- EP-A2- 0 246 116
- FR-A1- 2 707 926

## Description

### Field of the Invention

The present invention relates to a suspension for vehicles, of the type formed by a shock absorber resting on a lower support which is finished at the upper part with a head on which the structure of the vehicle rests. A suspension disclosing the features of the preamble of claim 1 is known from EP-A-0830955.

### Background to the Invention

In suspensions of the type set forth the connection between the structure of the vehicle, shock absorber and lower support is usually rigid, causing the tyre to acquire a certain inclination when the vehicle is driven on curves, such that the tread on the pavement is not flat, and thus a good adherence to the ground is not obtained.

To avoid this drawback suspensions are known with double trapezium, which are costly and thus can only be applied to top-of-the-line vehicles having enough space in the engine compartment.

### Description of the invention

The object of the present invention is a suspension of the type set forth hereinbefore, being formed such that it ensures a flat tread or support of the tyre, on the entire driving surface, even if the vehicle is being driven on curves. The invention tries to maintain a more uniform tracking, since the tyre has a position which is more perpendicular to the ground in any circumstance.

For this reason, in accordance with the invention, the guidance of the shock absorber is separated from the shock-absorbing function itself in the shock absorber forming part of the suspension.

In accordance with the present invention, the shock absorber is joined to the lower support according to a pin axle parallel to the axle of the vehicle, whereas to the structure of said vehicle it is joined by means of a ball joint. The shock absorber is complemented with two arms arranged between the support of the shock absorber and the head thereof. These two arms are joined to each other according to a pin parallel to the pin joining the shock absorber and the lower support. Of these two arms, the upper one is of a variable length and is fixed at its free upper end to the head of the shock absorber. The lower arm is of a constant length and fixed at its free lower end to the lower support of the shock absorber. These two arms form the means of guidance, whereas the shock-absorbing effect is carried out by the shock absorber.

The arrangement of the two arms provides geometrical advantages in the vertical run of the wheel, given that they adjust the angle of said wheel with the ground.

The upper arm can be made up of a telescopic element, one of the components of which is joined to the lower arm, whereas the other one is fixed at its free end to the head of the shock absorber.

### Brief description of the drawings

The constitution of the shock absorber of the invention will be better understood with the following description, made with reference to the drawings attached in which a non-limiting example of an embodiment is shown. In the drawings:
Figure 1 shows a perspective view of a suspension formed according to the invention, assembled on the wheel of a vehicle.
Figure 2 shows a rear perspective view of the suspension assembled on the wheel of Figure 1.
Figure 3 shows a side elevational view of the same suspension.
Figure 4 shows a sectional view of the suspension, taken according to the line of section IV-IV of Figure 3.
Figure 5 shows a diametrical sectional view of the head of the suspension, taken according :o the line of section V-V of Figure 3.

### Detailed description of an embodiment

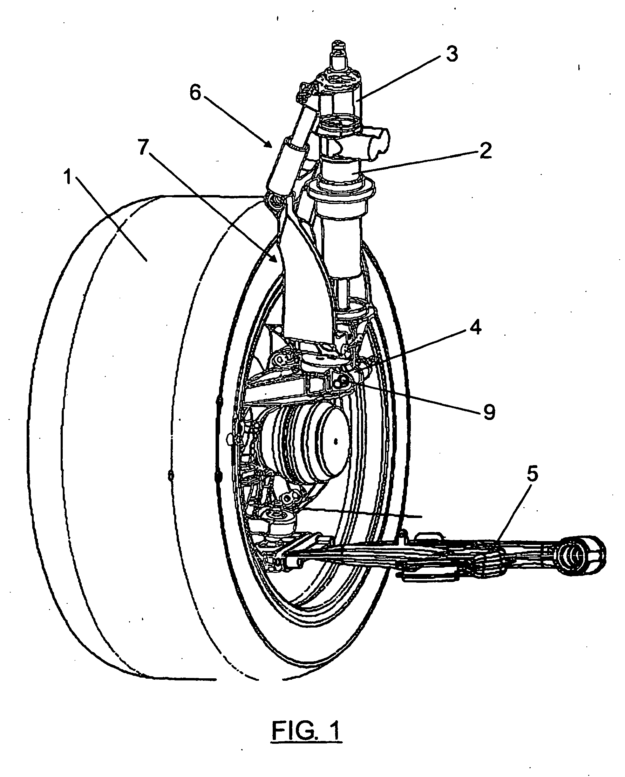

Figure 1 shows a suspension formed according to the invention, assembled for a wheel 1 of a vehicle. This suspension includes a shock absorber 2 finished on the upper part with a head 3 and it is assembled on the lower part on a support of shock absorber 4, which will support the axle of the wheel and to which the arm 5 of the steering system is connected.

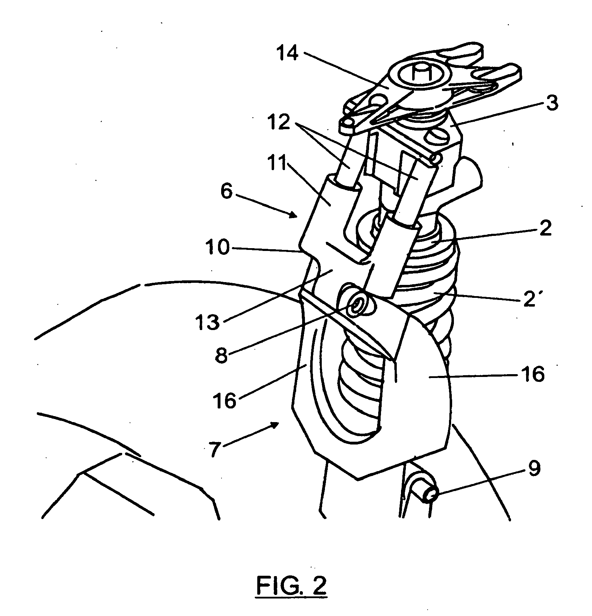

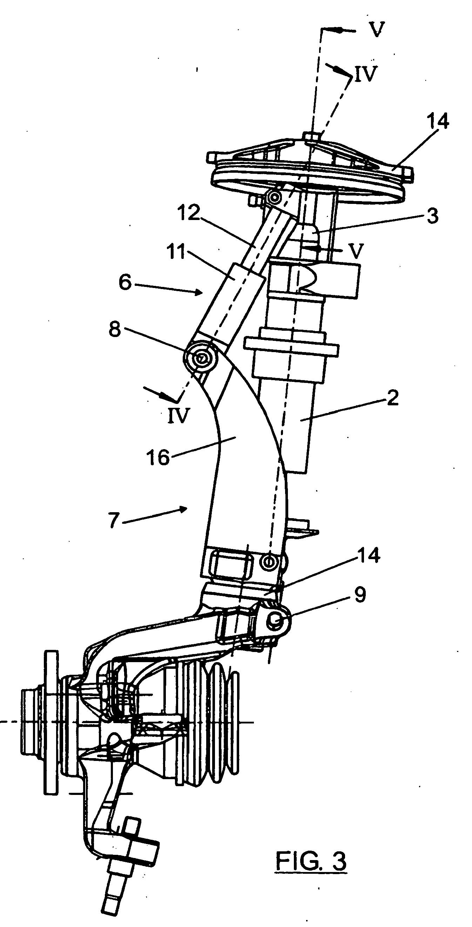

The shock absorber 2 is completed, as can best be seen in Figures 2 and 3, with two arms, an upper one 6 and another lower one 7 joined to each other according to a pin 8 parallel to the longitudinal axle of the vehicle. The lower arm 7 is fixed to the lower support 4, to which the shock absorber 2 is joined by means of the pin 9 which is parallel to the pin 8 joining the two arms. The upper arm 6 is of variable length and can be made up of telescopic elements, one of the components 10 of which adopts, in the embodiment shown in the drawings, a U-shape, with side branches 11 of tubular structure, in which cylindrical hubs 12 are partially housed and able to move, these being fixed at their free upper end to head 2 of the shock absorber. The U-shaped piece 10 is provided in the central branch with a hub 13 through which the lower arm 7 is joined, according to the pin 8.

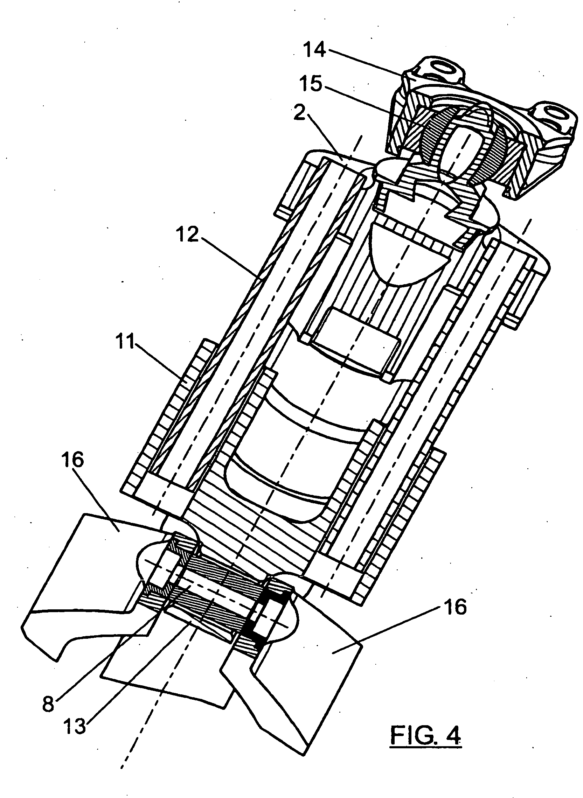

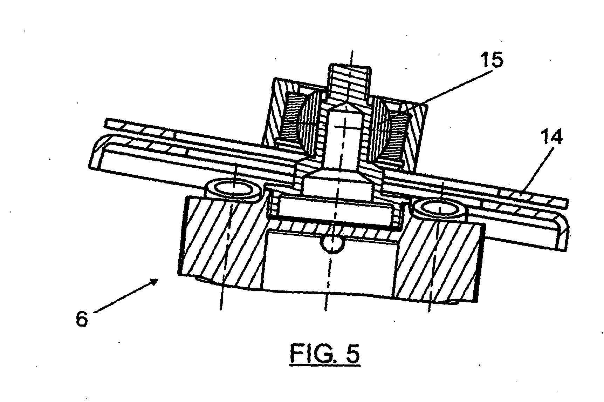

The structure of the vehicle rests on the head 3 of the shock absorber, for example by means of a support 14 which, as can be better seen in Figures 4 and 5, is connected to said head by means of a ball joint 15.

The lower arm 7 can adopt a fork shape, the hub 13 of the U-shaped piece of the upper arm being housed and joined between the end of which branches 16.. In the lower part this fork rests on the lower support 4, to which it is fixed.

As can be seen in Figure 2, the shock absorber 2 can include a spring 2'.

In order for the system to only have one degree of freedom, the cylindrical hubs 12 must be embedded in the head 3 of the shock absorber. As there is a certain angle between the upper arm 6 and the pin of the shock absorber, the support or connection of the structure of the vehicle on the suspension must be carried out by means of the ball joint 15. In addition, for the suspension to work, the shock absorber must be joined at its lower part by means of the pin 9, with which the angle variations between wheel and shock absorber will be absorbed with the vertical displacement.

With the constitution referred to, the angle formed between the upper arm 6 and the pin of the shock absorber 2 will vary depending on the variation in length of the shock absorber 2. This variation of the angle of the arm 6 will induce in the lower support 4, by means of the lower arm 7, actions tending to maintain the wheel 1 in a position perpendicular to the road surface, thus obtaining a more uniform tracking.

As an alternative the position of the arms 6 and 7 can be inverted.

## Claims

1. - A suspension for vehicles made up of a shock absorber (2) resting on a lower support (4) and on the head (3) of which the structure of the vehicle is supported, wherein the shock absorber (2) is joined to the lower support (4) according to a pin (9) parallel to the axle of the vehicle and between said support (4) and the head (3) of the shock absorber (2) two arms (6,7) are assembled that are joined to each other in parallel to the pin (9) joining the shock absorber (2) and the lower support (4), an upper one (6) being fixed at its free upper end to the head (3) of the shock absorber (2), and another lower one (7) of a constant length, being fixed at its free lower end to the lower support of the shock absorber, **characterized in that** the shock absorber (2) is joined to the structure of said vehicle by means of a ball joint (15) and the two arms (6,7) are joined together to a pin (8) wherein the upper arm (6) being of variable length.

2. - A suspension according to claim 1, **characterized in that** the upper arm (6) comprises a U-shaped piece (10), the side branches (11) of which are of a tubular structure, and two cylindrical hubs (12) being housed with the ability to move in said tubular side branches (11), the cylindrical hubs (12) being fixed at their free upper end to the head (3) of the shock absorber (2), whereas the U-shaped piece (10) is provided in the central branch with a hub (13) through which the lower arm (7) is joined.

3. - A suspension according to claim 1, **characterized in that** the lower arm (7) adopts a fork shape, the hub (13) of the U-shaped piece of the upper arm (6) being housed and joined between the end of the branches (16) of the lower arm (7), whereas the lower part of said fork is supported on and is fixed at its central part on the lower support (4).

## Patentansprüche

1. Aufhängung für Fahrzeuge, bestehend aus einem Stoßdämpfer (2), der auf einer unteren Auflage (4) ruht, und auf dessen Kopf (3) das Fahrwerk des Fahrzeugs aufgestützt ist, wobei der Stoßdämpfer (2) mit der unteren Auflage (4) einem zur Achse des Fahrzeugs parallelen Stift (9) entsprechend verbunden ist, und zwischen der genannten Auflage (4) und dem Kopf (3) des Stoßdämpfers (2) zwei Arme (6, 7) zusammengefügt sind, die miteinander parallel zum Stift (9) verbunden sind, der den Stoßdämpfer (2) und die untere Auflage (4) verbindet, wobei ein Oberer (6) an seinem freien oberen Ende an dem Kopf (3) des Stoßdämpfers (2) befestigt ist, und ein anderer Unterer (7) mit einer konstanten Länge an seinem freien unteren Ende an der unteren Auflage des Stoßdämpfers befestigt ist, **dadurch gekennzeichnet, dass** der Stoßdämpfer (2) mit dem Fahrwerk des genannten Fahrzeugs durch ein Kugelgelenk (15) verbunden ist, und die zwei Arme (6, 7) miteinander an einem Stift (8) verbunden sind, wobei der obere Arm (6) eine variable Länge hat.

2. Aufhängung nach Anspruch 1, **dadurch gekennzeichnet, dass** der obere Arm (6) ein U-förmiges Teil (10) umfasst, dessen Seitenschenkel (11) eine rohrförmige Struktur haben, und wobei zwei zylindrische Naben (12) mit der Fähigkeit, sich zu bewegen, in den genannten rohrförmigen Seitensschenkel (11) aufgenommen sind, wobei die zylindrischen Naben (12) an ihrem freien oberen Ende an dem Kopf (3) des Stoßdämpfers (2) befestigt sind, während das U-förmige Teil (10) in dem zentralen Schenkel mit einer Nabe (13) versehen ist, durch welche der untere Arm (7) verbunden ist.

3. Aufhängung nach Anspruch 1, **dadurch gekennzeichnet, dass** der untere Arm (7) eine Gabelform annimmt, wobei die Nabe (13) des U-förmigen Teils des oberen Arms (6) zwischen dem Ende der Schenkel (16) des unteren Arms (7) aufgenommen und verbunden ist, während der untere Teil der genannten Gabel an seinem zentralen Teil an der unteren Auflage (4) befestigt und abgestützt ist.

## Revendications

1. Suspension pour véhicules constituée d'un amortisseur de chocs (2) qui repose sur un support inférieur (4) et sur la tête (3) duquel est supportée la structure du véhicule, dans la quelle l'amortisseur de chocs (2) est relié au support inférieur (4) selon une broche (9) parallèle à l'axe du véhicule et entre ledit support (4) et la tête (3) de l'amortisseur de chocs (2) sont assemblés deux bras (6, 7) qui sont reliés l'un à l'autre en parallèle à la broche (9) qui relie l'amortisseur de chocs (2) et le support inférieur (4), l'un supérieur (6) étant fixé par son extrémité supérieure libre à la tête (3) de l'amortisseur de chocs (2), et l'autre inférieur (7) d'une longueur constante, étant fixé par son extrémité inférieure libre au support inférieur de l'amortisseur de chocs, **caractérisée en ce que** l'amortisseur de chocs (2) est relié à la structure dudit véhicule au moyen d'un joint à rotule (15) et les deux bras (6, 7) sont reliés avec une broche (8), le bras supérieur (6) étant d'une longueur variable.

2. Suspension selon la revendication 1, **caractérisée en ce que** le bras supérieur (6) comprend une pièce sous forme de U (10), les branches latérales (11) de laquelle ont une structure tubulaire, et deux moyeux cylindriques (12) étant logés avec la capacité de se déplacer dans lesdites branches latérales tubulaires (11), les moyeux cylindriques (12) étant fixés par leur extrémité supérieure libre à la tête (3) de l'amortisseur de chocs (2), tandis que la pièce sous forme de U (10) est disposée dans la branche centrale avec un moyeu (13) à travers lequel est relié le bras inférieur (7).

3. Suspension selon la revendication 1, **caractérisée en ce que** le bras inférieur (7) prend une forme de fourche, le moyeu (13) de la pièce sous forme de U du bras supérieur (6) étant logé et relié entre l'extrémité des branches (16) du bras inferieur (7), tandis que la partie inférieure de ladite fourche est appuyée et fixée par sa partie centrale sur le support inférieur (4).
